# EUROPEAN PATENT SPECIFICATION

(11) **EP 1 849 222 B1**
(45) Date of publication and mention of the grant of the patent: **22.06.2011**
(21) Application number: 06716604.1
(22) Date of filing: 06.02.2006
(51) Int. Cl.: H02G 3/22

(54) **FIRE-RESISTANT ASSEMBLY FOR A CONDUIT PASSAGE**
FEUERBESTÄNDIGE BAUGRUPPE FÜR EINE DURCHFÜHRUNG
ASSEMBLAGE RESISTANT AU FEU POUR PASSAGE DE CONDUIT

(30) Priority: 14.02.2005 NL 1028270
(43) Date of publication of application: 31.10.2007
(73) Proprietor: J. van Walraven Holding B.V., 3641 RK Mijdrecht (NL)
(72) Inventor: VAN WALRAVEN, Jan, NL-3641 GP Mijdrecht (NL)
(74) Representative: Houben, Christiaan Hein Willem Frans
(86) International application number: PCT/NL2006/000061
(87) International publication number: WO 2006/085753

(56) References cited:
- EP-A- 0 486 299
- GB-A- 2 252 456
- GB-A- 2 334 770
- US-B1- 6 725 615

## Description

The invention relates to making passages for conduits and the like through partitions, for example the walls, floors of a building, fire-resistant. For passages of this type, it is known to use a sleeve which surrounds the conduit at the location of the passage, comprising intumescent material which in the event of a fire swells as a result of the increase in temperature and thereby seals off the passage in a fire-resistant manner.

Various aspects play a role in fire-resistant passages of this nature.

One aspect relates to the transfer of heat via the fire-resistant assembly from one room to an adjacent room. On this basis, under certain circumstances fire may still occur in an adjacent room.

Another practical aspect is that the thickness of the wall or the like, and therefore the length of the passage, varies in practice. It will be clear that if an entire building is provided with fire-resistant passages, for example a hotel with a number of storeys, a large number of differently designed fire-resistant assemblies will be desirable. In this case, another aspect is that the desired performance of the fire-resistant assembly, in particular with regard to the swelling action of the intumescent material, may vary.

The document US-6,725,615-B1 discloses the preamble of claim 1.

It is an object of the invention to provide solutions which constitute an improvement to one or more of the aspects described above compared to known fire-resistant assemblies. It is at least an object of the invention to propose alternative solutions.

The invention provides firstly a fire-resistant assembly according to claim 1. In this assembly, the coupling means ensure that the metal casing parts are held at a distance from one another, so that in the event of a fire the heat cannot pass quickly from one side of the assembly to the other. In principle, just a short distance between the casing parts is sufficient to achieve this.

The invention is based on the insight that a metal casing acts as a heat conductor. This is often advantageous for the swelling action of the intumescent material, which takes place on the basis of an increase in the temperature of said material. From the point of view of fire proofing, however, the passage of heat through the casing is not always advantageous, in particular if a fire-resistant assembly projects out of the wall, floor or the like on both sides. By way of example in the case of a passage for a floor, it will then be possible for floor covering material in an upper room to ignite if the casing becomes hot as a result of a fire in a lower room. Using coupling means according to the invention between the casing parts effectively limits this risk.

It is preferably provided that the coupling means themselves are of thermally insulating design, for example comprise plastic, so that the casing parts are thermaly separated from one another by the said plastic. In a variant, however, the coupling means could also be designed, for example, as thin metal strips, for example with a cross-section area which is considerably smaller than that of the coupled casing parts, for example less than 20%, preferably less than 10%, of the cross-sectional area of the metal casing parts.

It is preferable for the coupling means to engage on the edge regions of the casing parts, so that the casing parts are directly coupled to one another. After all, the casing parts are stable, whereas the intumescent material and any other (foam) material on the inner side of the casing does not generally offer sufficient strength.

The coupling means can be attached to the casing parts by all suitable connection techniques, for example by welding, riveting, screw connection, adhesive bonding, clamping, etc. In one possible variant, the coupling means are moulded onto one or both casing parts that are to be coupled, for example if the coupling means are formed from plastic.

In one possible embodiment, the coupling means form a snap-action connection to one or both casing parts. This snap-action connection can be brought about during production of the assemblies. If appropriate, the snap-action connection can be released/made by a fitter, in order to modify the assembly at the location where the installation work is being carried out by coupling/decoupling one or more casing parts.

By way of example, the coupling means span the gap between adjacent casing parts and engage on edge regions of these casing parts.

By way of example, the coupling means form one or more separately produced (plastic) components which can be coupled to each of the casing parts.

It is advantageous if the coupling means connect the adjacent casing parts to one another in a substantially rigid manner.

In a practical, advantageous embodiment, the coupling means comprise plastic components formed by (injection) moulding. It will be clear that coupling means of this type have a thermally insulating action, so that when the casing parts are positioned at a distance from one another, a thermally insulating action which is even more improved is achieved.

By way of example, the coupling means are provided with one or more projections, and one or more casing parts are provided with complementary openings, into which a projection in each case fits.

In an embodiment which is advantageous for installation work, a casing part is designed as a flexible metal plate which can be bent around a conduit or the like, preferably by hand.

The invention also relates to a fire-resistant assembly according to claim 15. In the case of this assembly, it is provided that the fire-resistant assembly comprises a plurality of casing parts as well as coupling means which can be actuated, for example by an installation fitter, in such a manner that the casing parts can be coupled to one another in the axial direction.

This fire-resistant assembly makes it possible to adapt the length to the length of the passage through the wall or other partition by coupling the casing parts. Preferably, each casing part can be coupled to another casing part on both sides.

Providing casing parts with a length of, for example, 100 mm makes it easy for the installation fitter to realize assemblies with an effective length of, for example, 200 mm or 300 mm or more himself. Obviously, it would also be possible to provide for the production of casing parts with different length dimensions, so that a large number of combinations are possible.

The casing parts could also be produced with different forms of intumescent material, so that the fire-resistant action of the assembly may vary, for example as a function of the quality of the wall, the conduit or the like to be passed through, etc.

One possible embodiment provides a casing part without intumescent material, for example to be positioned between casing parts comprising intumescent material in the event of a high wall thickness, a cavity wall or the like.

The casing parts could also differ with regard to the design of the casing. By way of example, the casing can be adapted to a specific installation situation.

The various solutions according to the invention will be explained below with reference to the drawing, in which:
Fig. 1 shows a perspective view of an exemplary embodiment of a fire-resistant assembly according to the invention,
Fig. 2 shows a perspective view of an sleeve of a fire-resistant assembly according to the invention,
Figs. 3a, b respectively show a perspective view of a coupling member of a fire-resistant assembly according to the invention and a cross-sectional view of casing parts coupled by the coupling member,
Figs. 4a, b show corresponding views to Figures 3a, b of an alternative coupling member,
Figs. 5a, b show corresponding views to Figures 3a, b of an alternative coupling member,
Figs. 6a, b show corresponding views to Figures 3a, b of yet another alternative coupling member, and
Figs. 7a, b shows corresponding views to Figures 3a, b of yet another alternative coupling member.

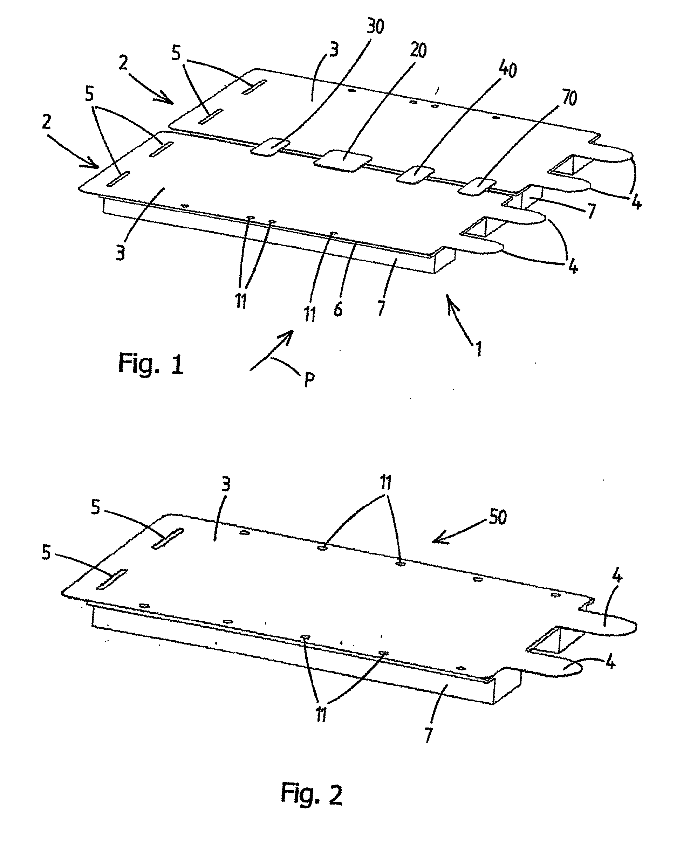

Figure 1 shows a fire-resistant assembly 1 according to the invention which is designed to be positioned around a conduit or the like, which extends in the axial direction (arrow P in Figure 1) of the assembly 1, at the location of a passage through a partition (such as a wall or the like). In the event of a fire, the assembly 1 has a sealing action with respect to the passage for the conduit through a wall or floor.

In this example, the assembly 1 comprises two parts 2, which in this example are of identical design. These parts 2 are located one behind the other in the axial direction.

Each part 2 has a stable metal casing part 3. It can be seen in the drawing that each casing part 3 is made from a flexible metal plate, for example a relatively thin sheet of (stainless) steel, for example with a thickness of at most 1.5 mm, for example approximately 0.5 mm. Obviously, it is also conceivable for each casing part of the assembly to have previously been formed into a ring, for example in production. In these cases, the wall thickness of each casing part and/or the design of the casing part may be completely different from a relatively thin flexible metal plate, for example a relatively thick-walled box shape.

As will be explained in more detail below, coupling means are provided, which couple the casing parts 3 to one another, the coupling means holding the adjacent casing parts 3 at a distance from one another, with a gap between them.

In this example, the metal plate of each casing part 3 is provided at one end with one or more flexible lips 4 and at the opposite end with one or more associated insertion openings 5, so that the casing part 3 can be folded around the conduit or the like and a lip 4 can be fitted into the associated insertion opening 5 and bent over in order to fix the casing part 3. It will be clear that altogether different closure mechanisms for closing the casing parts positioned around the conduit are also conceivable.

Suitable intumescent material, in the present example in the form of a relatively thin layer 6 which completely covers the metal plate, is arranged on the inside of each casing part 3, in the drawing the underside.

As is known, intumescent material swells when it is exposed to heat, resulting in the intended sealing action. The stable metal casing part 3 in this case forms an external boundary for the swelling intumescent material. As an alternative to a layer, it would also be possible to provide strips or the like of intumescent material.

In the present example, two strips of readily compressible foam material 7 which are at an axial distance from one another lie along the inner side of the layer of intumescent material. Foam material of this type makes it easy to ensure that the assembly adjoins the circumference of the conduit. This can serve as a sound-insulating measure and/or to prevent undesirable air flow (energy loss) or movement of smoke in the event of a fire even before the intumescent material has expanded.

In the present example, the outer side of the casing part 3 is formed by the outer side of the metal plate. In practice, any gap between the outer side of the sleeve which is arranged around the conduit and the partition (wall) will be filled by a filler material, for example mortar, plaster, fire-resistant putty or the like.

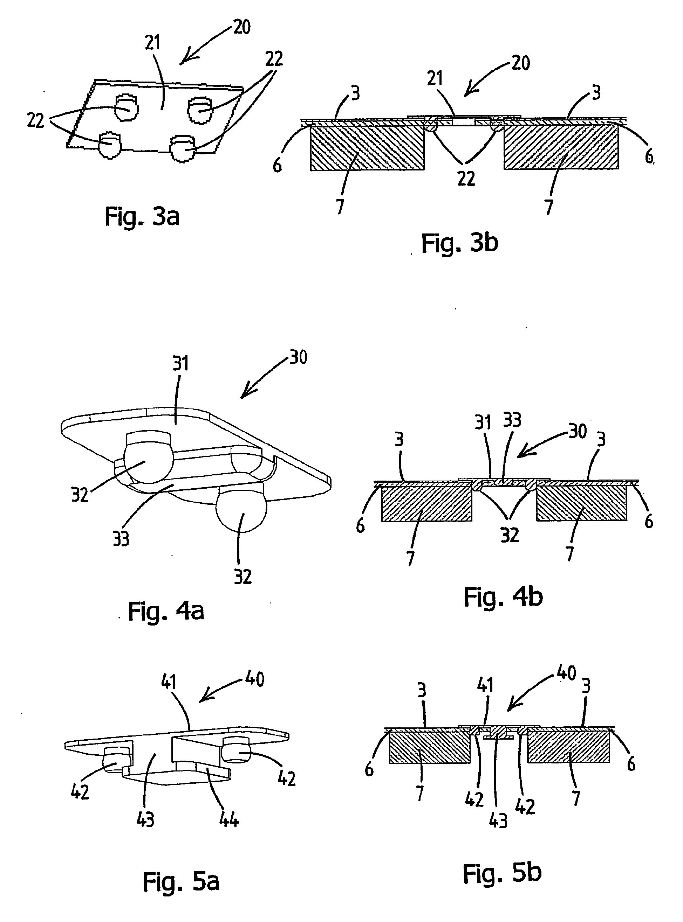

Exemplary embodiments of coupling means 20, 30, 40, 70 between the casing parts 3 are illustrated in Figure 1 and are shown in more detail in Figures 3a, b, 4a, b, 5a, b, 6a, b and 7a, b.

The arrangement and partly also the design of the coupling means ensures that if a casing part 3 is exposed to a fire, the casing part 3 coupled to it does not heat up too quickly or may remain below a defined (standard) temperature, for example for a defined (standard) period.

It can be seen that the coupling means 20, 30, 40, 60, 70 hold the adjacent casing parts 3 at a distance from one another, so that there is no direct contact promoting heat transfer between the metal casing parts 3.

As can be seen in Figure 1, each casing part 3 is provided with a series of openings 11 along the two axial edges.

The coupling means 20, 30, 40, 60, 70 which are to be described in more detail below are separately manufactured components which can be coupled to each of the casing parts 3 in the factory and/or by hand.

In this example, each coupling member 20, 30, 40 is provided with one or more projections which fit into the said openings 11, so as to realize a (snap-action) connection between the coupling members 20, 30, 40 and the casing parts 3.

The coupling means 20, 30, 40, 60, 70 are in this case made from plastic, for example by an (injection) moulding process. Making them from plastic ensures that adjacent casing parts 3 are effectively separated from one another in a thermaly insulating manner by plastic, in addition to the casing parts 3 being held at a distance from one another.

Figures 3a, b reveal the coupling member 20, which is designed with a web 21, which in the example shown comes to bear against the outer side of the casing parts 3. At opposite ends, the web 21 has a plurality of, in this example two, projections 22 which fit into an associated group of openings 11 in a casing 3. The projections 22 are in this case barrel-shaped, so that they can be pushed through the openings 11 and then snap in behind the casing 3 by means of their thicker part. The design with a plurality of projections 22 results in a rigid connection between the casing parts 3, and a parallel position of the coupled casing parts 3 is maintained.

Figures 4a, b reveal the coupling member 30, which is designed with a web 31 with one projection 32 at each of its opposite ends. These projections 32 are likewise designed to snap into an opening 11. On the side facing towards the casing parts 3, the web 31 is provided with a projecting rib 33. This rib 33 serves as a spacer member and comes to lie between adjacent casing parts 3. This ensures a defined spacing between the casing parts 3.

Figures 5a, b reveal the coupling member 40, which is designed with a plate-like web 41 with a projection 42 at each of two opposite ends. The rib 43 serves as a spacer member between the casing parts 3. Projecting flanges 44, which face away from one another, are formed on the side of the rib 43 which is remote form the web 43. These flanges engage, albeit with play, behind the axial edges of the casing parts 3, which prevents the coupling member 40 from coming loose.

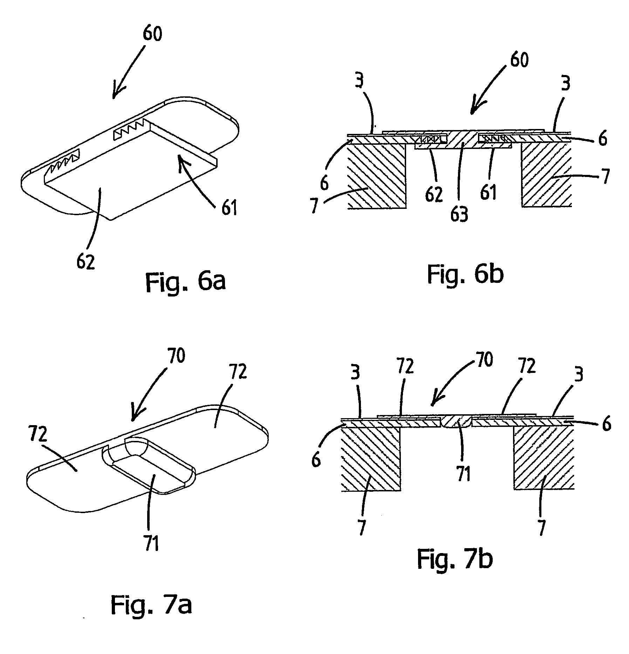

Figure 6a, b reveal a coupling member 60 made from plastic, which is designed with clamping jaws 61, 62 which engage in a clamping manner on the edges of the casing parts 3 that are to be coupled. If appropriate, it would also be possible to provide jaws with a hooking action, which by way of example engage behind an edge of an opening in the casing or behind a flanged edge of the casing by means of a hook lip, instead of clamping jaws. In this case too, there is a rib 63 which serves as a spacer between the casing parts 3.

Figures 7a, b reveal a coupling member 70 made from plastic with a rib 71 which serves as a spacer between the casing parts 3. It is provided that the coupling member 70 has lips 72 which are fixed, for example by adhesive bonding, to each of the casing parts 3.

In an embodiment of the coupling member which is not shown, there is provision for (self-adhesive) (plastic) tape to be used as coupling member, this tape being connected to both casing parts. In the case of relatively thick tape grade, the tape can also realize the spacer function, while in other cases (in the case of thin tape) it is advantageous to use spacers, which may be fixed to the casing parts using the same tape.

The axial length of a casing part 3 is, for example, 10 centimetres, but it is also possible in production to provide for the manufacture of casing parts of varying lengths, so that by suitable combination it is possible to realize a multiplicity of assemblies of casing parts of different lengths.

As a variant for an assembly which is assembled in the factory, it is possible to provide, for example if the projections described are easy to fit into and remove from the openings 11 in the casing parts 4, for an installation fitter himself to be able to adapt the length of the assembly to the situation during installation of the assembly 1.

In the case of an assembly which is preassembled in the factory, this can be achieved, for example, by the fitter removing one or more casing parts from the said assembly and/or adding one or more casing parts to it.

It is also conceivable for the assembly to be delivered as a "kit of parts", i.e. as separate elements which then have to be combined by the fitter to form a suitable assembly.

Obviously, it would also be possible to provide for differently designed coupling means which can be actuated by an installation fitter. Coupling means of this type preferably also enable the adjacent casing parts to be connected to one another substantially without movement, so as to obtain a stable unit.

It is also conceivable to produce couplable casing parts which differ in terms of length, so that in the case of factory assembly or assembly by the installation fitter, it is possible to realize assemblies of varying lengths.

It is also conceivable to provide couplable casing parts which differ in terms of their intumescent action, so that different assemblies can be realized. By way of example, it is conceivable for a sleeve with a relatively slow-acting intumescent material to be combined with one or more casing parts comprising quick-acting intumescent material. It is also conceivable for a casing without intumescent material to be positioned between two casing parts with intumescent material; this casing without intumescent material can be coupled in the same way as the casing parts with intumescent material.

For certain installation situations, it would also be possible to provide couplable casing parts with a shape which is specifically adapted to this situation, for example with a casing with a circumferential flange or other supporting feature which comes to bear against the wall or floor provided with the passage.

A thermal insulation between adjacent casing parts is preferably realized even in the case of an assembly design which can be varied by the installation fitter.

Figure 2 shows a casing part 50 of the type shown in Figure 1, with identical parts being provided with the same reference numerals. The main difference is the pattern of openings 11. In this example there is a regular pattern of openings 11.

## Claims

1. Fire-resistant assembly (1) comprising intumescent material (6) for positioning around a conduit, cable or the like extending in the axial direction (P) of the assembly (1), which assembly (1), in the event of a fire, has a sealing action with respect to the passage for the conduit through a partition, such as a wall or floor, as a result of the intumescent material (6) swelling,
which assembly (1) has a stable metal casing which can be positioned in annular form around the conduit, with intumescent material (6) being applied at least to the inner side of the casing, so that the stable metal casing, in the event of a fire, encloses the said intumescent material (6) as it swells, wherein the casing of the fire-resistant assembly is assembled from two or more metal casing parts (3), which are arranged behind one another substantially in the axial direction (P) of the assembly, **characterized in that** the metal casing parts (3) are coupled by coupling means (20, 30, 40, 60, 70) which hold the said adjacent casing parts (3) at a distance from one another.

2. Assembly according to claim 1, in which the coupling means are of thermally insulating design.

3. Assembly according to claim 2, in which the coupling means comprise plastic, in such a manner that adjacent casing parts are separated from one another in a thermally insulating manner by the plastic of the coupling means.

4. Assembly according to claim 3, in which the coupling means comprise plastic components formed by (injection) moulding.

5. Assembly according to one or more of the preceding claims, in which the coupling means form a releasable connection between adjacent casing parts.

6. Assembly according to one or more of the preceding claims, in which the coupling means realize a snap-action connection to a casing part.

7. Assembly according to one or more of the preceding claims, in which the coupling means connect the adjacent casing parts to one another in a substantially rigid manner.

8. Assembly according to one or more of the preceding claims, in which the coupling means are provided with one or more projections, and one or more casing parts are provided with complementary openings, into which a projection in each case fits.

9. Assembly according to one or more of the preceding claims, in which the coupling means comprise plastic components with a plurality of projections at opposite ends, which projections fit into associated openings in a casing part.

10. Assembly according to one or more of the preceding claims, in which the coupling means comprise a spacer member which comes to lie between adjacent casing parts and thereby ensures a defined distance between the casing parts.

11. Assembly according to one or more of the preceding claims, in which a casing part is formed by a flexible metal plate.

12. Assembly according to claim 11, in which the metal plate is provided at one end with one or more flexible lips and at an opposite end with one or more associated insertion openings, so that the casing part can be folded around the conduit or the like and a lip can be fitted into the associated insertion opening and bent over in order to fix the casing part.

13. Assembly according to one or more of the preceding claims, in which a casing part is provided on the inner side with a layer or strips of intumescent material.

14. Assembly according to one or more of the preceding claims, in which a casing part is provided on the inner side with (plastic) foam material to allow it to effectively adjoin the conduit that is to be encased.

15. Fire-resistant assembly according to claim 1, wherein the coupling means can be actuated by an installation fitter, in such a manner that the casing parts can be coupled to one another in the axial direction.

16. Assembly according to claim 15, in which the coupling means are designed as described in one or more of claims 2-14.

17. Method for making a passage for a conduit or the like through a partition, such as a wall, floor or the like, fire-resistant, comprising fitting a fire-resistant assembly according to claim 15 or 16 around the conduit.

18. A combination of metal casing parts and coupling means as described in one or more of claims 1-14 for assembling an assembly according to claim 15.

## Patentansprüche

1. Feuerbeständige Anordnung (1), die ein Intumeszenz-Material (6) zum Positionieren um eine Leitung, ein Kabel oder dergleichen umfasst, die/das in der axialen Richtung (P) der Anordnung (1) verläuft, wobei die Anordnung (1) im Fall eines Brandes eine dichtende Wirkung in Bezug auf den Durchlass für die Leitung durch eine Trenneinrichtung, wie beispielsweise eine Wand oder einen Boden, hat, da das Intumeszenz-Material (6) anschwillt, die Anordnung (1) ein stabiles Metallgehäuse aufweist, das in Ringform um die Leitung herum positioniert werden kann, wobei das Intumeszenz-Material (6) wenigstens auf die Innenseite des Gehäuses aufgebracht ist, so dass das stabile Metallgehäuse im Fall eines Brandes das Intumeszenz-Material (6) umschließt, während es anschwillt, und das Gehäuse der feuerbeständigen Anordnung (1) aus zwei oder mehr Metall-Gehäuseteilen (3) zusammengesetzt wird, die hintereinander im Wesentlichen in der axialen Richtung (P) der Anordnung angeordnet sind, **dadurch gekennzeichnet, dass** die Metall-Gehäuseteile (3) über Verbindungseinrichtungen (20, 30, 40, 60, 70) verbunden sind, die die benachbarten Gehäuseteile (3) in einem Abstand zueinander halten.

2. Anordnung nach Anspruch 1, wobei die Verbindungseinrichtungen wärmeisolierend konstruiert sind.

3. Anordnung nach Anspruch 2, wobei die Verbindungseinrichtungen Kunststoff umfassen, so dass benachbarte Gehäuseteile durch den Kunststoff der Verbindungseinrichtungen wärmeisolierend voneinander getrennt sind.

4. Anordnung nach Anspruch 3, wobei die Verbindungseinrichtungen Kunststoffkomponenten umfassen, die durch Spritzgießen erzeugt werden.

5. Anordnung nach einem der vorangehenden Ansprüche, wobei die Verbindungseinrichtungen eine lösbare Verbindung zwischen benachbarten Gehäuseteilen bilden.

6. Anordnung nach einem oder mehreren der vorangehenden Ansprüche, wobei die Verbindungseinrichtungen eine Einrastverbindung mit einem Gehäuseteil bilden.

7. Anordnung nach einem oder mehreren der vorangehenden Ansprüche, wobei die Verbindungseinrichtungen die benachbarten Gehäuseteile im Wesentlichen starr miteinander verbinden.

8. Anordnung nach einem oder mehreren der vorangehenden Ansprüche, wobei die Verbindungseinrichtungen mit einem oder mehreren Vorsprung/Vorsprüngen versehen sind und ein oder mehrere Gehäuseteil/e mit komplementären Öffnungen versehen ist/sind, in die ein Vorsprung in jedem Gehäuse passt.

9. Anordnung nach einem oder mehreren der vorangehenden Ansprüche, wobei die Verbindungseinrichtungen Kunststoffkomponenten mit einer Vielzahl von Vorsprüngen an einander gegenüberliegenden Enden umfassen, und die Vorsprünge in dazugehörige Öffnungen in einem Gehäuseteil passen.

10. Anordnung nach einem oder mehreren der vorangehenden Ansprüche, wobei die Verbindungseinrichtungen ein Abstandshalteelement umfassen, das zwischen benachbarten Gehäuseteilen liegt und so einen bestimmten Abstand zwischen den Gehäuseteilen gewährleistet.

11. Anordnung nach einem oder mehreren der vorangehenden Ansprüche, wobei ein Gehäuseteil durch eine flexible Metallplatte gebildet wird.

12. Anordnung nach Anspruch 11, wobei die Metallplatte an einem Ende mit einer oder mehreren flexiblen Lippe/n und an einem gegenüberliegenden Ende mit einer oder mehreren dazugehörigen Einführöffnung/en versehen ist, so dass der Gehäuseteil um die Leitung oder dergleichen herum gefaltet werden kann und eine Lippe in die dazugehörige Einführöffnung eingepasst und umgebogen werden kann, um den Gehäuseteil zu fixieren.

13. Anordnung nach einem oder mehreren der vorangehenden Ansprüche, wobei ein Gehäuseteil an der Innenseite mit einer Schicht oder Streifen aus Intumeszenz-Material versehen ist.

14. Anordnung nach einem oder mehreren der vorangehenden Ansprüche, wobei ein Gehäuseteil an der Innenseite mit Schaumstoffmaterial (aus Kunststoff) versehen ist, um zuzulassen, dass sich die Anordnung wirkungsvoll an die Leitung anfügt, die umschlossen werden soll.

15. Feuerbeständige Anordnung nach Anspruch 1, wobei die Verbindungseinrichtungen von einem Installateur so betätigt werden können, dass die Gehäuseteile in der axialen Richtung miteinander verbunden werden können.

16. Anordnung nach Anspruch 15, wobei die Verbindungseinrichtungen wie in einem oder mehreren der Ansprüche 2-14 beschrieben ausgeführt sind.

17. Verfahren, mit dem ein Durchlass für eine Leitung oder dergleichen durch eine Trenneinrichtung, wie beispielsweise eine Wand, einen Boden oder dergleichen, feuerbeständig gemacht wird, wobei es Anbringen einer feuerbeständigen Anordnung nach Anspruch 15 oder 16 um die Leitung herum umfasst.

18. Kombination aus Metall-Gehäuseteilen und Verbindungseinrichtungen, wie sie in einem oder mehreren der Ansprüche 1-14 beschrieben sind, zum Zusammensetzen einer Anordnung nach Anspruch 15.

## Revendications

1. Assemblage résistant au feu (1) comprenant un matériau intumescent (6) destiné à être positionné autour d'un conduit, d'un câble ou similaires s'étendant dans la direction axiale (P) de l'assemblage (1), lequel assemblage (1), dans le cas d'un feu, a une action de scellage par rapport au passage pour le conduit à travers une cloison, telle qu'un mur ou un sol, suite au gonflement du matériau intumescent (6),
lequel assemblage (1) comporte un boîtier en métal stable qui peut être positionné en forme annulaire autour du conduit, le matériau intumescent (6) étant appliqué au moins au côté interne du boîtier, de sorte que le boîtier en métal stable, dans le cas d'un feu, enferme ledit matériau intumescent (6) à mesure qu'il gonfle, dans lequel le boîtier de l'assemblage résistant au feu (1) est assemblé à partir de deux parties de boîtier en métal (3) ou plus, qui sont agencées les unes derrière les autres sensiblement dans la direction axiale (P) de l'assemblage, **caractérisé en ce que** les parties de boîtier en métal (3) sont couplées par des moyens de couplage (20 ; 30, 40, 60, 70) qui maintiennent lesdites parties de boîtier (3) adjacentes à une certaine distance les unes des autres.

2. Assemblage selon la revendication 1, dans lequel les moyens de couplage sont de conception thermiquement isolante.

3. Assemblage selon la revendication 2, dans lequel les moyens de couplage comprennent une matière plastique, de telle manière que les parties de boîtier adjacentes sont séparées les unes des autres de manière thermiquement isolante par la matière plastique des moyens de couplage.

4. Assemblage selon la revendication 3, dans lequel les moyens de couplage comprennent des composants en matière plastique formés par moulage (par injection).

5. Assemblage selon une ou plusieurs des revendications précédentes, dans lequel les moyens de couplage forment un raccord libérable entre des parties de boîtier adjacentes.

6. Assemblage selon une ou plusieurs des revendications précédentes, dans lequel les moyens de couplage réalisent un raccord à action instantanée sur une partie de boîtier.

7. Assemblage selon une ou plusieurs des revendications précédentes, dans lequel les moyens de couplage raccordent les parties de boîtier adjacentes les unes aux autres de manière sensiblement rigide.

8. Assemblage selon une ou plusieurs des revendications précédentes, dans lequel les moyens de couplage sont pourvus d'une ou plusieurs saillies, et une ou plusieurs parties de boîtier sont pourvues d'ouvertures complémentaires, dans lesquelles une saillie s'ajuste dans chaque cas.

9. Assemblage selon une ou plusieurs des revendications précédentes, dans lequel les moyens de couplage comprennent des composants en matière plastique avec une pluralité de saillies à des extrémités opposées, lesquelles saillies s'ajustent dans des ouvertures associées dans une partie de boîtier.

10. Assemblage selon une ou plusieurs des revendications précédentes, dans lequel les moyens de couplage comprennent un organe espaceur qui vient à reposer entre des parties de boîtier adjacentes et assure ainsi une distance définie entre les parties de boîtier.

11. Assemblage selon une ou plusieurs des revendications précédentes, dans lequel une partie de boîtier est formée par une tôle de métal flexible.

12. Assemblage selon la revendication 11, dans lequel la tôle de métal est pourvue à une extrémité d'une ou plusieurs lèvres flexibles et à une extrémité opposée, d'une ou plusieurs ouvertures d'insertion associées, de sorte que la partie de boîtier peut être pliée autour du conduit ou similaires et une lèvre peut être ajustée dans l'ouverture d'insertion associée et fléchie par-dessus afin de fixer la partie de boîtier.

13. Assemblage selon une ou plusieurs des revendications précédentes, dans lequel une partie de boîtier est pourvue sur le côté interne d'une couche ou de bandes de matériau intumescent.

14. Assemblage selon une ou plusieurs des revendications précédentes, dans lequel une partie de boîtier est pourvue sur le côté interne d'un matériau mousse (plastique) pour lui permettre d'être efficacement contigu avec le conduit qui doit être logé.

15. Assemblage résistant au feu selon la revendication 1, dans lequel les moyens de couplage peuvent être actionnés par un installateur, de telle manière que les parties de boîtier peuvent être couplées les unes aux autres dans la direction axiale.

16. Assemblage selon la revendication 15, dans lequel les moyens de couplage sont conçus comme décrit dans une ou plusieurs des revendications 2 à 14.

17. Procédé de fabrication d'un passage pour un conduit ou similaires à travers une cloison, telle qu'un mur, un sol ou similaires, résistant au feu, comprenant l'ajustement d'un assemblage résistant au feu selon la revendication 15 ou 16 autour du conduit.

18. Combinaison de parties de boîtier en métal et de moyens de couplage tels que décrits dans une ou plusieurs de revendications 1 à 14, pour montage d'un assemblage selon la revendication 15.
